# EUROPÄISCHE PATENTSCHRIFT

(11) **EP 0 946 644 B1**
(45) Veröffentlichungstag und Bekanntmachung des Hinweises auf die Patenterteilung: **19.09.2001**
(21) Anmeldenummer: 97952803.1
(22) Anmeldetag: 26.11.1997
(51) Int. Cl.: C08L 33/12, C08F 220/14

(54) **(METHYL)METHACRYLAT-MALEINSÄUREANHYDRID-COPOLYMERISATE ALS POLYMERE MODIFIZIERUNGSMITTEL FÜR KUNSTSTOFFE UND DAMIT HERGESTELLTE MISCHUNGEN UND POLYMERVERBUNDE**
(METHYL)METHACRYLATE MALEIC ACID ANHYDRIDE COPOLYMERS AS POLYMER MODIFYING AGENTS FOR PLASTICS AND MIXTURES AND POLYMER COMPOSITES PRODUCED THEREWITH
COPOLYMERISATS DE (METHYL)METHACRYLATE-ANHYDRIDE D'ACIDE MALEIQUE S'UTILISANT COMME AGENTS DE MODIFICATION POLYMERES POUR DES MATIERES PLASTIQUES ET MELANGES ET COMPOSITES POLYMERES PRODUITS A L'AIDE DESDITS COPOLYMERISATS

(30) Priorität: 18.12.1996 DE 19652758
(43) Veröffentlichungstag der Anmeldung: 06.10.1999
(73) Patentinhaber: Röhm GmbH & Co. KG, 64293 Darmstadt (DE)
(72) Erfinder: WICKER, Michael, D-64342 Seeheim-Jugenheim (DE); NUMRICH, Uwe, D-64331 Weiterstadt (DE); MAY, Michael, D-64347 Griesheim (DE); JAKSCH, Hermann, D-64372 Ober-Ramstadt (DE); RÜPPEL, Mona, D-64739 Höchst (DE)
(86) Internationale Anmeldenummer: EP9706586
(87) Internationale Veröffentlichungsnummer: WO9827157

(56) Entgegenhaltungen:
- EP-A- 0 321 878
- EP-A- 0 733 671
- Derwent Accession, Woche 8820, London: Derwent Publications Ltd., AN 88-136401 (20), Klasse C08J, XP002900027 & JP,A,63 077943 (MITSUI DU PONT POLYCHEMICAL) Zusammenfassung.
- GUEGAN, P. et al. Kinetics of Chain Coupling at Melt Interfaces. Macromolecules, August 1994, Band 27, Nr. 18, Seiten 4993-4997, XP002900026, insbesondere Seite 4993, linke Spalte, letzter Absatz- rechte Spalte, 1. Absatz, Seite 4996, "conclusions" (in der Beschreibung genannt)
- Derwent Accession, Woche 8820, London: Derwent Publications Ltd., AN 88-136401 (20), Klasse C08J, XP002900027 & JP,A,63 077943 (MITSUI DU PONT POLYCHEMICAL)
- GUEGAN, P. et al. Kinetics of Chain Coupling at Melt Interfaces. Macromolecules, August 1994, Band 27, Nr. 18, Seiten 4993-4997, XP002900026

## Beschreibung

### Stand der Technik

Bis auf wenige Ausnahmen, wie zum Beispiel Polymethylmethacrylat und Acrylnitril-Butadien-Styrol-Copolymer (ABS) , Polymethylmethacrylat und PVC oder Polystyrol (PS) und Poly[(2,6-dimethyl)-1,4-phenylenoxid] sind verschiedene Kunststoffe miteinander unverträglich und lassen sich aus energetischen Gründen nicht miteinander vermischen [siehe T. K. Kwei, H. L. Frisch, Macromolecules, 11, 1267 (1978)].

Homogene Mischungen verschiedener Kunststoffe auf molekularer Ebene sind eher die Ausnahme. Die Herstellung einer Mischung oder einer Legierung oder eines Verbundes oder eines Blends aus miteinander unverträglichen Polymeren ist technisch schwierig und führt in der Regel aufgrund von Phasenseparation zu Materialien mit schlechteren Gebrauchseigenschaften im Vergleich zu den Einzelkomponenten (Entmischung des Blends, Delamination des Verbundes). Technisch erscheint es jedoch oftmals wünschenswert, die guten Materialeigenschaften verschiedener Kunststoffe miteinander kombinieren zu können.So zeichnen sich z. B. Polyamide (PA) durch ihre ausgezeichnete chemische Beständigkeit, ihr Fließvermögen bei der Verarbeitung und ihre Wärmeformbeständigkeit aus; Defizite besitzen sie hingegen bezüglich ihrer Maßhaltigkeit.

Die US-PS 4.946.918 (Nippon Oil and Fats Co.) beschreibt Verträglichkeitsvermittler für Mischungen synthetischer Harze, wie beispielsweise verschiedene Polyamid-Typen, Polycarbonat/ABS-Typen und Polycarbonat/Poly-(butylenterephthalat)-Typen. Diese Verträglichkeitsvermittler sind Copolymere aus Maleinsäureanhydrid, Maleinsäure oder Maleinsäuresalzen mit Polyoxyalkylenen.

EP-A 113 105 beschreibt ein Verfahren zur Herstellung wärmeformbeständiger Formmassen, wobei ein Gemisch aus einem Copolymerisat (I), bestehend aus Methylmethacrylat, Vinylaromat und Maleinsäureanhydrid, und einem Copolymerisat (II), bestehend aus Methylmethacrylat und gegebenenfalls weiteren Comonomeren erzeugt wird.

DE-A 44 40 219 beschreibt ein Verfahren zur Herstellung von Copolymerisaten aus Alkylmethacrylat, Vinylaromaten und Maleinsäureanhydrid. Die Polymerisation kann dabei bei niedrigen Temperaturen im Bereich von z. B. 50 bis 60 °C in einer Polymerisationskammer stattfinden. Anschließend kann das Blockpolymerisat entnommen, gemahlen und einer entgasenden Extrusion mit anschließender Granulation unterworfen werden.

Acrylnitril-Butadien-Styrol-Copolymerisate (ABS) weisen z. B. eine sehr gute Schlag- bzw. Kerbschlagzähigkeit selbst bei tiefen Temperaturen, eine gute Festigkeit und Maßhaltigkeit bei jedoch nur schlechter Chemikalienbeständigkeit und ungenügender Fließfähigkeit und Wärmeformbeständigkeit auf.

Aus in der Literatur beschriebenen Untersuchungen [M. Stolp, H.-J. Radusch; Kunststoffe 85, 4, (1995)] ist bekannt, daß beide Materialien ABS und PA miteinander unverträglich sind und selbst die Zumischung nur geringer Anteile an Polyamid zu Acrylnitril-Butadien-Styrol-Copolymerisaten (ABS) zu einer deutlichen Versprödung des ABS führt. Diese Versprödung der Kunststoffteile behindert unter anderem auch das Recycling.

Die Aufgabe der vorliegenden Erfindung besteht somit darin, einen Weg aufzuzeigen, bestimmte Polymerblends oder -verbunde aus miteinander unverträglichen Kunststoffen zumindest unter Erhalt der positiven Materialeigenschaften der Einzelkomponenten herstellen zu können.

Im speziellen handelt es sich hierbei um Blends von Polymethacrylat verträglichen Kunststoffen (VK), z. B. Polymethylmethacrylat (PMMA), Acrylnitril-Butadien-Styrol-Copolymerisate (ABS) oder Polyvinylidenfluorid (PVDF) mit Polymeren (PN), die wenigstens eine endständige nucleophile Gruppe (wie z. B. Amino-, Hydroxygruppe) enthalten. Als Beispiel für die Polymere (PN) seien hier Polyamide (PA) und Polyester genannt.

Bevorzugt sind Polyamide (PA) wie z.B. PA3, PA4, PA5, PA6, PA7, PA8, PA9, PA10, PA11, PA12, die durch Polykondensation von ω-Aminocarbonsäuren oder durch Polymerisation der entsprechenden Lactame hergestellt werden.
Als Polyester sind insbesondere Polyethylenterephthalat und Polybutylenterephthalat zu nennen.

Bevorzugt sind Polyamide, insbesondere PA6, PA6.6, PA6.10, PA10, PA11, PA12, wobei die "doppelzahligen" Polyamide (PA6.6, PA6.10) durch Umsetzung von α-ω-Diamino- mit α,ω-Dicarbonsäureverbindungen hergestellt werden (siehe hierzu z. B.: *Elias, H. G. (1981) Makromoleküle: Struktur, Eigenschaften*, *Synthesen, Stoffe, Technologien; 4. völlig überarb. u. wesentl. erw. Aufl*., *Hüthig und Wepf- Verlag; Kapitel 28.2* "*Polyamide*", *S. 796 ff.)*

Es wurde gefunden, daß die Aufgabe überraschenderweise durch die Verwendung eines polymeren Modifizierungsmittels (CP) bestehend aus den Monomerkomponenten Methylmethacrylat (MMA), Maleinsäureanhydrid (MSA) oder einer anderen Copolymerisierbaren Säure oder einem Copolymerisierbaren Anhydrid und gegebenfalls weiteren, keine weiteren funktionellen Gruppen enthaltenden, radikalisch polymerisierbaren Comonomeren, gelöst wird.

Die weiteren Comonomere sind nicht kritisch für die Ausführbarkeit der Erfindung, sofern sie außer der in der radikalischen Polymerisation aufgehenden funktionellen Vinylgruppe keine weiteren funktionellen Gruppen, wie z. B. Säure- oder Hydroxygruppen, aufweisen. Geeignete Comonomere sind z. B. Ester der Methacrylsäure (z. B. Ethylmethacrylat, Butylmethacrylat, Hexylmethacrylat, Cyclohexylmethacrylat), Ester der Acrylsäure (z. B. Methylacrylat, Ethylacrylat, Butylacrylat, Hexylacrylat, Cyclohexylacrylat) oder Styrol und Styrolderivate, wie beispielsweise α-Methylstyrol oder p-Methylstyrol. Durch reaktive Anbindung kommt es zu einer Modifizierung des Polymeren (PN), das wenigstens eine endständige nucleophile Gruppe enthält, und somit zu einer deutlichen Verbesserung des Eigenschaftsprofils der oben genannten Polymermischungen oder Polymerverbunde. Die Modifizierung kann z. B. beim Aufschmelzen einer Granulatmischung des Copolymerisats (CP) und des Polymeren (PN) stattfinden.

Der im folgenden verwendete Begriff "Mischungen und Polymerverbunde" bezeichnet daher die physikalische und gegebenenfalls chemische Einheit des erfindungsgemäßen Copolymerisats mit den zu modifizierenden Polymeren (PN) und/oder den Polymethacrylat-verträglichen Kunststoffen (VK).

Anstelle von Maleinsäureanhydrid kann im Prinzip auch eine andere copolymerisierbare Säure oder ein copolymerisierbares Anhydrid wie z. B. Maleinsäure, Itaconsäure, Itaconsäureanhydrid, Fumarsäure oder Glutaranhydrid eingesetzt werden. Besonders bevorzugt ist jedoch Maleinsäureanhydrid.

Die Erfindung betrifft Mischungen oder Polymerverbunde des Copolymerisats (CP), bestehend aus
70 - 99.9 Gew.-% Methylmethacrylat,
0.1 - 5 Gew.-% Maleinsäureanhydrid oder einer anderen Copolymerisierbaren Säure oder einem Copolymerisierbaren Anhydrid und
0 - 25 Gew.-% weiterer vinylisch copolymerisierbarer Monomere, die mit Ausnahme der Vinylfunktion keine weiteren funktionellen Gruppen aufweisen
mit einem Polymethacrylat-verträglichen Kunststoff (VK) und oder einem Polymeren (PN), welches wenigstens eine endständige nucleophile Gruppe enthält.

Copolymerisate aus MMA mit MSA sind aus der Literatur bekannt. So wird in der deutschen Offenlegungsschrift DE 2.724.360 (Fa. BAYER AG) ein Verfahren zur Herstellung restmonomerarmer Formmassen, unter den Beispielen befindet sich auch ein Cyclohexylmethacrylat-MMA-MSA-Terpolymeres, beschrieben. Die Polymerisation erfolgt hier bei einer Reaktorinnentemperatur von 140°C bis zu Umsätzen von 40 %, der Polymersirup wird nachfolgend in einer speziellen Entgasungsvorrichtung aufkonzentriert und in einem weiteren Verfahrensschritt in einer Schneckenmaschine bis zu Restmonomergehalten < 0.1 % entgast.

In Jpn. Kokai Tokkyo Koho JP 60.141.708 (C. A. 104: 6583e) werden Copolymere aus 67 - 99 Gew.-% MMA mit 1 - 33 Gew.-% MSA beansprucht. Die Polymerisation erfolgt hier bei 160 °C bis zu 62 % Umsatz. Anschließend wird der Sirup auf 200 °C erwärmt und nachfolgend bei 230 °C in einem Extruder entgast.

Beide beschriebenen Verfahren sind technisch aufwendig und wirtschaftlich unattraktiv und weisen weiterhin den Nachteil auf, daß große Mengen an nicht umgesetzten Monomeren aus dem Produkt über verschiedene Entgasungsvorrichtungen entfernt werden müssen. Die Verwendung der so gewonnenen Produkte als polymeres Modifizierungsmittel für unverträgliche Polymermischungen oder -verbunde wird nicht erwähnt.

Die Copolymerisate (CP) bestehen aus:
70 - 99.9 Gew.-% Methylmethacrylat,
0.1 - 5 Gew.-% Maleinsäureanhydrid und
0 - 25 Gew.-% weiterer Methacrylsäureester, Acrylsäureester oder Styrolderivaten, die keine weiteren funktionellen Gruppen enthalten,

Sie werden durch Substanzpolymerisation der Monomeren unter Zusatz von Radikalkettenstartern und Molekulargewichtsreglern bei Temperaturen < 80°C zu Umsätzen > 95 %, bevorzugt > 98 % erzeugt.

Die Polymerisation wird in an sich bekannter Weise durch radikalbildende Polymerisationsinitiatoren ausgelöst, läßt sich aber auch mit geringerer Polymerisationsgeschwindigkeit rein thermisch durchführen. In der Regel genügt eine einmalige Zugabe des Polymerisationsinitiators vor Beginn der Polymerisation, wobei der Polymerisationsinitiator so gewählt wird, daß bei den Polymerisationsbedingungen bis zum Abschluß der Polymerisation eine ausreichende Radikalbildung erfolgt.

Beispielhaft für Polymerisationsinitiatoren seien genannt: Azoverbindungen wie 2,2'-Azobis-(isobutyronitril) oder 2,2'-Azobis(2,4-dimethylvaleronitril), Redox-Systeme, wie beispielsweise die Kombination von tertiären Aminen mit Peroxiden oder bevorzugt Peroxide (vgl. hierzu beispielsweise H. Rauch-Puntigam, Th. Völker, "Acryl- und Methacrylverbindungen", Springer, Heidelberg, 1967 oder Kirk-Othmer, Encyclopedia of Chemical Technology, Vol. 1, Seiten 386ff, J. Wiley, New York, 1978). Beispiele geeigneter Peroxid-Polymerisationsinitiatoren sind Dilauroylperoxid, tert.- Butylperoctoat, tert.-Butylperisononanoat, Dicyclohexylperoxidicarbonat, Dibenzoylperoxid oder 2,2-Bis-(tert.-butylperoxy)-butan. Man kann auch bevorzugt die Polymerisation mit einem Gemisch verschiedener Polymerisationsinitiatoren unterschiedlicher Halbwertzeit durchführen, beispielsweise Dilauroylperoxid und 2,2-Bis-(tert.-butylperoxy)-butan, um den Radikalstrom im Verlauf der Polymerisation sowie bei verschiedenen Polymerisationstemperaturen konstant zu halten. Die eingesetzten Mengen an Polymerisationsinitiator liegen im allgemeinen bei 0,01 bis 2 Gew.-% bezogen auf das Monomerengemisch.

Die Einstellung der Molekulargewichte der Copolymerisate (CP) erfolgt durch Polymerisation des Monomerengemisches in Gegenwart von Molekulargewichtsreglern, wie insbesondere von den dafür bekannten Mercaptanen, wie beispielsweise n-Butylmercaptan, n-Dodecylmercaptan, 2-Mercaptoethanol oder 2-Ethylhexylthioglycolat, wobei die Molekulargewichtsregler im allgemeinen in Mengen von 0,05 bis 5 Gew.-% bezogen auf das Monomerengemisch, bevorzugt in Mengen von 0,1 bis 2 Gew.-% und besonders bevorzugt in Mengen von 0,2 bis 1 Gew.-% auf das Monomerengemisch eingesetzt werden (vgl. beispielsweise H. Rauch-Puntigam, Th. Völker, "Acryl- und Methacrylverbindungen", Springer, Heidelberg, 1967; Houben-Weyl, Methoden der organischen Chemie, Bd. XIV/1, Seite 66, Georg Thieme, Heidelberg, 1961 oder Kirk-Othmer, Encyclopedia of Chemical Technology, Vol. 1, Seiten 296ff, J. Wiley, New York, 1978). Bevorzugt wird als Molekulargewichtsregler n-Dodecylmercaptan eingesetzt.

Die solchermaßen eingestellten mittleren Molekulargewichte M_{w} der Copolymerisate (CP) liegen im allgemeinen zwischen 10⁴ und 5 x 10⁵ Dalton, vorzugsweise zwischen 3 x 10⁴ und 2,5 x 10⁵ Dalton, entsprechend reduzierten Viskositäten η_{spez}/c, gemessen nach ISO 1628-6 in Chloroform, von 10 bis 150 mlg⁻¹, vorzugsweise von 15 bis 100 mlg⁻¹, bezogen auf Polymethylmethacrylat als Eichstandard (zur Bestimmung der mittleren Molekulargewichte M_{w} vgl. beispielsweise H.F. Mark et al., Encyclopedia of Chemical Science and Technology, Vol. 10, Seiten 1 bis 19, J. Wiley, New York, 1978).

Weiterhin können die Monomerenmischungen neben den Polymerisationsinitiatoren und Molekulargewichtsreglern weitere Additive, wie beispielsweise UV-Absorber, Antioxidantien, Farbstoffe oder Pigmente sowie Entformungshilfsmittel in Anteilen von bis zu 10 Gew.-% bezogen auf die eingesetzten Monomeren enthalten. Die Herstellung der Copolymerisate (CP) aus den Monomermischungen erfolgt vorzugsweise per Substanzpolymerisation, besonders vorzugsweise in geeigneten Polymerisationskammern herkömmlicher Bauart. Im allgemeinen werden die Polymerisationskammern während der Polymerisation im Wasserbad bei Temperaturen zwischen 20 und 80 °C temperiert, um einen gleichmäßigen Radikalstrom aus dem Zerfall des Polymerisationsinitiators aufrechtzuerhalten.

Nach Abschluß der Polymerisation, die zu Monomerumsätzen von mindestens 95 %, vorzugsweise mindestens 98 % geführt wird, werden die Copolymerisate (CP) als Block der Polymerisationskammer entnommen.

Nach einer Temperung bei Temperaturen im Bereich von 100 °C - 140 °C werden die Polymerisate mechanisch zerkleinert, auf einem Extruder (zum Teil unter Anlegen eines Vakuums) entgast und nachfolgend granuliert. Der Entgasungsschritt wird durchgeführt, um auf Restmonomergehalte unter 1, insbesondere unter 0,5 Gew.-% zu kommen.

Durch die tiefere Polymerisationstemperatur und den höheren Umsatz wird das Copolymerisationsverhalten der Monomeren deutlich beeinflußt, sodaß sich die erfindungsgemäßen Methacrylat-MSA-Copolymerisate (CP) von den bei höherer Temperatur hergestellten Copolymerisaten der JP 60.141.708 oder der DE 2.724.360 hinsichtlich ihrer Architektur wesentlich unterscheiden.

Umsatz und Polymerisationstemperatur bestimmen die Anlagerungswahrscheinlichkeit der einzelnen Monomeren an die wachsende Polymerkette und somit auch die Sequenzlängenverteilung in den Polymeren insbesondere dann, wenn sich die Polymerisationstemperatur der Ceiling-Temperatur eines der Comonomeren annähert (wie bei JP 60.141.708 im Fall von MMA) oder diese sogar überschreitet.

Dieses Verhalten ist literaturbekannt und wird z. B. von Wittmer am Beispiel der Copolymerisation von MMA mit α-Methylstyrol erläutert [P. Wittmer, Makromol. Chem; 103, 188, (1967)]. Auf den in dieser Erfindung beschriebenen Fall übertragen, ist zu vermuten, daß, je geringer der Unterschied zwischen Polymerisations- und Ceilingtemperatur des MMA ist, desto geringer wird auch die Wahrscheinlichkeit, daß längere MMA-Sequenzen bei der Polymerisation ausgebildet werden und desto höher wird die Wahrscheinlichkeit, daß das unreaktivere Comonomer, hier MSA, an die wachsende Polymerkette angelagert wird.

Die erfindungsgemäßen Methacrylat-MSA-Copolymeren (CP) werden erfindungsgemäß als polymeres Modifizierungsmittel von Polymeren (PN), die wenigstens eine endständige nucleophile Gruppe enthalten, eingesetzt. Die erfindungsgemäßen Methacrylat-MSA-Copolymeren (CP) werden weiterhin erfindungsgemäß als polymere Modifizierungsmittel von inkompatiblen Polymermischungen oder -verbunden, bestehend aus PMMA-verträglichen Kunststoffen (VK) und Polymeren (PN), die wenigstens eine endständige nucleophile Gruppe enthalten, eingesetzt.

Die Modifizierung erfolgt in der Regel im Schmelzezustand, wobei sowohl alle Mischungskomponenten zusammen aufgeschmolzen werden können, oder aber zunächst die Herstellung eines Preblends aus dem Methacrylat-MSA-Copolymeren (CP) mit einer der Komponenten des Polymerblends unter nachfolgender Zugabe der weiteren Komponente erfolgen kann. Die Zugabe der weiteren Komponente kann z. B. "in-line" nach der Compoundierung des Preblends, beispielsweise über eine Feststoffseitendosierung in den Compoundierextruder erfolgen. Ferner kann das hergestellte Preblend über einen separaten Compoundierprozeß mit der weiteren Komponente vermischt werden.

Weiterhin können die erfindungsgemäßen Methacrylat-MSA-Copolymeren (CP) erfindungsgemäß als Haftvermittler zwischen den genannten miteinander unverträglichen Thermoplasten eingesetzt werden, um z. B die Gefahr einer Delamination bei einem Mehrschichtverbund zu vermeiden. Die Modifizierung kann in diesem Fall z. B. durch Mehrschichtextrusion der Komponenten aufeinander erfolgen, wobei das erfindungsgemäße Methacrylat-MSA-Copolymerisat (CP) die Zwischenschicht zwischen den oben beschriebenen miteinander unverträglichen Thermoplasten bildet.

Ebenfalls möglich ist hier auch die Coextrusion eines Preblends, bestehend aus dem erfindungsgemäßen Methacrylat-MSA-Copolymeren (CP) mit dem PMMA-verträglichen Thermoplasten (VK) oder dem Polymeren (PN) , das wenigstens eine endständige nuclophile Gruppe enthält, und der dritten Komponente.

Bei Kunststoffverbunden wird darüberhinaus durch das polymere Modifizierungsmittel (CP) die Recyclierbarkeit der Verbundmaterialien sichergestellt, indem bei einer Aufarbeitung durch Regranulation eine Verbesserung der mechanischen Eigenschaften erreicht wird.

Die Wirksamkeit der Methacrylat-MSA-Copolymeren in den genannten Anwendungen ist vermutlich auf die spezielle Architektur der Polymerketten zurückzuführen. Durch die Copolymerisationsparameter charakterisiert, wird das MSA nur sehr schlecht in die Polymerkette eingebaut. So entstehen bevorzugt bei tieferen Polymerisationstemperaturen längere MMA-Sequenzen innerhalb der Polymerketten, die für eine Mischbarkeit mit PMMA-verträglichen Polymeren (VK) verantwortlich sein könnten.

Aus der Literatur ist bekannt, daß Mischungen von normalerweise nicht kompatiblen Polymeren sich durch Pfropf- oder Blockcopolymere stabilisieren lassen, die mit beiden Blendkomponenten starke Wechselwirkungen eingehen können [P. Guégan et al., Makromolecules 27 (1994) 4993-4997]. Solche verträglichkeitsvermittelnden Stoffe zeigen ein analoges Verhalten zu Seifen-Molekülen an einer Wasser/Öl-Grenzfläche und werden aus diesem Grund "Polymer-Emulgatoren" oder "Polymer-Dispergatoren" genannt. Bei der Zumischung von Diblock- oder Pfropfcopolymeren der Monomereinheiten der Mischungskomponenten des Polymerblends zu der mehrphasigen Polymermischung wirken diese Copolymerisate als Verträglichkeitsvermittler zwischen den Polymeren, indem sie sich aufgrund ihrer partiellen Löslichkeit in den beiden Polymerphasen in der Phasengrenzfläche anordnen, die Grenzflächenenergie verringern und so die Haftkraft entscheidend erhöhen.

Voraussetzung für eine derartige Verträglichkeitsvermittlung sind ausreichend lange Sequenzen der beiden Polymerkomponenten im Copolymerisat und keine vollständige Verträglichkeit des Copolymerisats mit einem der beiden Mischungspartner, damit sich die verträglichkeitsvermittelnden Copolymerisate auch tatsächlich in der Phasengrenzfläche anreichern.

Ist für die Herstellung dieser Sequenzpolymere ein gesonderter Prozeß notwendig, so wird das Verfahren komplex und ist mit hohen Kosten verbunden. In dem hier dargestellten erfindungsgemäßen Fall kann jedoch auf eine gesonderte Herstellung der Sequenzpolymeren verzichtet werden, da der Polymermischprozeß (Compoundierung) mit der Herstellung der verträglichkeitsvermittelnden Sequenzpolymeren verbunden wird. Dieser Prozeß ist ein Spezialfall der Reaktivextrusion und wird als "reaktive Compoundierung" bezeichnet [M. K. Akkapedi, B. Van Buskirk and J. H. Glans, "Reactive Alloying of Polymers through Addition and Condensation Reactions", International Conference on Advances in High Performance Polymer Alloys (1991)].

Unter den Blendbedingungen erfolgt, wie aus den nachfolgend aufgeführten Beispielen ersichtlich wird, in der Schmelze eine Reaktivanbindung der nucleophilen Endgruppen des Polymeren (PN) an die Anhydridgruppen in den Methacrylat-MSA-Copolymeren (CP), sodaß die Methacrylat-MSA-Copolymeren als Verträglichkeitsvermittler fungieren können. Im Fall der Mehrschichtextrusion werden die Pfropfcopolymerisate an der Phasengrenzfläche gebildet und bewirken somit eine effiziente Verbundhaftung.

Nachfolgend werden Methoden zur Charakterisierung der reaktiven Wechselwirkung zwischen den Polymeren aufgeführt.
1.) Messung des Drehmoments während des Polymermischvorgangs in einem diskontinuierlichen Stempelkneter
   Die Pfropfcopolymerisation (Bildung von Polymerverbunden) zwischen reaktiven Komponenten einer Polymermischung führt zur Anhebung des Molekulargewichts, aus der eine Viskositätserhöhung und daraus folgend eine Erhöhung des Drehmoments der Knetelemente resultiert. Die Division des Drehmoments der Polymermischung, die ein verträglichkeitsvermittelndes Modifizierungsmittel enthält, durch das Drehmoment einer Polymermischung, in der anstelle des verträglichkeitsvermittelnden Modifizierungsmittels ein unreaktives, ansonsten jedoch analog aufgebautes Polymerisat eingesetzt wurde, führt zu dem Drehmomenterhöhungsfaktor ("DEF"). Dieser Drehmomenterhöhungsfaktor kennzeichnet die Stärke der reaktiven Wechselwirkung zwischen den Komponenten einer Polymermischung.
2.) Bestimmung der mechanischen Eigenschaften an spritzgegossenen Probekörpern
   Durch Bestimmung der mechanischen Eigenschaften an spritzgegossenen Probekörpern, insbesondere von Kerbschlagzähigkeit und Reißdehnung, läßt sich bei Vergleich mit Probekörpern aus Compounds ohne verträglichkeitsvermittelndes Modifizierungsmittel die Güte der Phasenanbindung charakterisieren.

### BEISPIELE

Die Erfindung soll durch die folgenden Beispiele erläutert werden:

### Beispiel 1

### Herstellung des Methylmethacrylat-MSA-Copolymerisats M1

Eine Monomermischung aus 7.920 g Methylmethacrylat und 80 g Maleinsäureanhydrid wird mit 8 g Dilauroylperoxid und 4 g 2,2-Bis-(tert.-butylperoxy)-butan als Polymerisationsinitiator und 32 g n-Dodecylmercaptan als Molekulargewichtsregler versetzt. Das resultierende Gemisch wird in eine Polymerisationskammer gefüllt und 10 min entgast. Danach wird im Wasserbad 1 Stunde bei 50 °C, 21 Stunden bei 45 °C und 7 Stunden bei 50 °C Wasserbadtemperatur polymerisiert.

Nach Entfernung der Polymerisationskammer wird das Polymerisat noch 12 Stunden bei 120 °C im Luftschrank getempert.
Nach Abkühlung wird das Polymerisat mechanisch zerteilt und auf einem Einschneckenextruder bei Temperaturen zwischen 220 °C (Einzugszone) und 240 °C unter Vakuum (p = 30 - 40 mbar) entgast und anschließend granuliert.

Das resultierende einphasige Copolymerisat ist klar und farblos. Es besitzt eine reduzierte Viskosität η sp/c in Chloroform nach ISO 1628-6 von 55 ml/g, entsprechend einem mittleren Molekulargewicht M_{w} von etwa 120.000 Dalton (bezogen auf einen Polymethylmethacrylat-Standard). Nach der Entgasungsextrusion weist das Produkt einen Restmonomerengehalt von 0.28 % MMA und 0.012 % MSA auf.

### Beispiel 2

### Herstellung des Methylmethacrylat-MSA-Copolymerisats M2

Eine Monomermischung aus 8.077 g Methylmethacrylat und 123 g Maleinsäureanhydrid wird mit 2,87 g Dilauroylperoxid und 0,82 g 2,2-Bis-(tert.-butylperoxy)-butan als Polymerisationsinitiator und 32,8 g n-Dodecylmercaptan als Molekulargewichtsregler versetzt.

Das resultierende Gemisch wird in eine Polymerisationskammer gefüllt und 10 min entgast. Danach wird im Wasserbad 6 Stunden bei 65 °C und 17 Stunden bei 55 °C Wasserbadtemperatur polymerisiert.

Nach Entfernung der Polymerisationskammer wird das Polymerisat noch 12 Stunden bei 120 °C im Luftschrank getempert.
Nach Abkühlung wird das Polymerisat mechanisch zerteilt und auf einem Einschneckenextruder bei Temperaturen zwischen 220 °C (Einzugszone) und 240 °C unter Vakuum (p = 30 - 40 mbar) entgast und anschließend granuliert.

Das resultierende einphasige Copolymerisat ist klar und farblos. Es besitzt eine reduzierte Viskosität η sp/c in Chloroform nach ISO 1628-6 von 55 ml/g, entsprechend einem mittleren Molekulargewicht M_{w} von etwa 120.000 Dalton (bezogen auf einen Polymethylmethacrylat-Standard). Nach der Entgasungsextrusion weist das Produkt einen Restmonomerengehalt von 0.19 % MMA und 0.042 % MSA auf.

### Beispiel 3

### Herstellung des Methylmethacrylat-MSA-Copolymerisats M3

Eine Monomermischung aus 7.840 g Methylmethacrylat und 160 g Maleinsäureanhydrid wird mit 8 g Dilauroylperoxid und 4 g 2,2-Bis-(tert.-butylperoxy)-butan als Polymerisationsinitiator und 32 g n-Dodecylmercaptan als Molekulargewichtsregler versetzt.

Das resultierende Gemisch wird in eine Polymerisationskammer gefüllt und 10 min entgast. Danach wird im Wasserbad 2.5 Stunden bei 50 °C und 35 Stunden bei 45 °C Wasserbadtemperatur polymerisiert.

Nach Entfernung der Polymerisationskammer wird das Polymerisat noch 12 Stunden bei 120 °C im Luftschrank getempert.
Nach Abkühlung wird das Polymerisat mechanisch zerteilt und auf einem Einschneckenextruder bei Temperaturen zwischen 220 °C (Einzugszone) und 240 °C unter Vakuum (p = 30 - 40 mbar) entgast und anschließend granuliert.

Das resultierende einphasige Copolymerisat ist klar und farblos. Es besitzt eine reduzierte Viskosität η sp/c in Chloroform nach ISO 1628-6 von 54 ml/g, entsprechend einem mittleren Molekulargewicht M_{w} von etwa 115.000 Dalton (bezogen auf einen Polymethylmethacrylat-Standard). Nach der Entgasungsextrusion weist das Produkt einen Restmonomerengehalt von 0.19 % MMA und 0.042 % MSA auf.

### Beispiel 4 (Vergleichsbeispiel)

### Herstellung des Polymethylmethacrylats V4

Es wird verfahren wie in Beispiel 1, nur daß als Monomer 8.000 g Methylmethacrylat (und kein Maleinsäureanhydrid) verwendet wird.

Das resultierende Polymerisat ist klar und farblos. Es besitzt eine reduzierte Viskosität η sp/c in Chloroform nach ISO 1628-6 von 55 ml/g, entsprechend einem mittleren Molekulargewicht M_{w} von etwa 120.000 Dalton (bezogen auf einen Polymethylmethacrylat-Standard). Nach der Entgasungsextrusion weist das Produkt einen Restmonomerengehalt von 0.29 % MMA auf.

### Beispiel 5

### Herstellung des MMA-Cyclohexylmethacrylat-MSA-Copolymerisats M5

Es wird verfahren wie in Beispiel 1, nur daß als Monomermischung 6478 g Methylmethacrylat, 1640 g Cyclohexylmethacrylat und 82 g Maleinsäureanhydrid verwendet wird.

Das resultierende einphasige Copolymerisat ist klar und farblos. Es besitzt eine reduzierte Viskosität η sp/c in Chloroform nach ISO 1628-6 von 52 ml/g, entsprechend einem mittleren Molekulargewicht M_{w} von etwa 110.000 Dalton (bezogen auf einen Polymethylmethacrylat-Standard). Nach der Entgasungsextrusion weist das Produkt einen Restmonomerengehalt von 0.21 % MMA, 0.19 % Cyclohexylmethacrylat und 0.028 % MSA auf.

### Beispiel 6 (Vergleichsbeispiel)

### Herstellung des MMA-Cyclohexylmethacrylat-Copolymerisats V6

Eine Monomermischung aus 6.400 g Methylmethacrylat und 1.600 g Cyclohexylmethacrylat wird mit 2,8 g Dilauroylperoxid und 0,8 g 2,2-Bis-(tert.-butylperoxy)-butan als Polymerisationsinitiator und 32 g n-Dodecylmercaptan als Molekulargewichtsregler versetzt.

Das resultierende Gemisch wird in eine Polymerisationskammer gefüllt und 10 min entgast. Danach wird im Wasserbad 5 Stunden bei 65 °C und 17 Stunden bei 55 °C Wasserbadtemperatur polymerisiert.

Nach Entfernung der Polymerisationskammer wird das Polymerisat noch 12 Stunden bei 120 °C im Luftschrank getempert.
Nach Abkühlung wird das Polymerisat mechanisch zerteilt und auf einem Einschneckenextruder bei Temperaturen zwischen 220 °C (Einzugszone) und 240 °C unter Vakuum (p = 30 - 40 mbar) entgast und anschließend granuliert.

Das resultierende einphasige Copolymerisat ist klar und farblos. Es besitzt eine reduzierte Viskosität η sp/c in Chloroform nach ISO 1628-6 von 51 ml/g, entsprechend einem mittleren relativen Molekulargewicht M_{w} von etwa 105.000 Dalton (bezogen auf einen Polymethylmethacrylat-Standard). Nach der Entgasungsextrusion weist das Produkt einen Restmonomerengehalt von 0.31 % MMA und 0.24 % Cyclohexylmethacrylat auf.

### Beispiele 7 - 12

Zur Charakterisierung der reaktiven Wechselwirkung des Verträglichkeitsvermittlers mit der nucleophil-terminierten Komponente des Polymerblends wurden 45 g "Vestamid X 4887" (Polyamid-12, Hersteller: Hüls AG, Viskositätszahl gemäß DIN 53727: 180 ml/g, Endgruppenverhältnis Amino zu Carboxyl: 5 zu 1) mit jeweils 5 g der in den Beispielen 1 - 6 beschriebenen Polymerisate in einem diskontinuierlichen Stempelkneter (Fa. "Brabender", Knetkammer-Volumen: 60 ml) bei 230 °C und einer Knetelementdrehzahl von 30 U/min vermischt.

Das Drehmoment wurde während des Knetvorgangs als Funktion der Zeit aufgezeichnet. Ein konstantes Drehmomentniveau (Gleichgewichtsdrehmoment "GDM") war nach 6 min Mischdauer erreicht. Zur Berechnung des jeweiligen Drehmomenterhöhungsfaktors ("DEF") wurde das "GDM" der Schmelzemischungen der Beispiele 7 - 10 bzw. 11 - 12 durch das "GDM" der zugehörigen Schmelzemischung Basis der unreaktiven Modifizierungsmittel (Beispiel 10 bzw. 12) dividiert.
Die so erhaltenen "DEF" sind in der folgenden Tabelle dargestellt.

| Beispiel Nr. | Verträglichkeitsvermittler | Zuordnung zu den Beispielen 1 - 6 | "DEF" |
|---|---|---|---|
| 7 | PMMA-co-MSA 99 - 1 | M1 (aus Beispiel 1) | 1.8 |
| 8 | PMMA-co-MSA 98,5 - 1,5 | M2 (aus Beispiel 2) | 2.4 |
| 9 | PMMA-co-MSA 98 - 2 | M3 (aus Beispiel 3) | 2.7 |
| 10 (Vergleich) | PMMA 100 | V4 (aus Beispiel 4) | 1.0 |
| 11 | PMMA-co-CHMA-MSA 79 - 20 - 1 | M5 (aus Beispiel 5) | 1.8 |
| 12 (Vergleich) | PMMA-co-CHMA 80 - 20 | V6 (aus Beispiel 6) | 1.0 |

### Beispiel 13

Zur Charakterisierung der reaktiven Wechselwirkung des Verträglichkeitsvermittlers aus Beispiel 2 mit dem, ebenfalls nucleophilterminierten thermoplastischen Werkstoff Polybutylenterephthalat ("Vestodur 3000", Hersteller: "Hüls AG", Viskositätszahl gemäß DIN 53727: 165 ml/g, Endgruppenverhältnis Carboxy- zu Hydroxy-: 3 zu 2), wurde analog der in den Beispielen 7 - 12 beschriebenen Vorgehensweise der "DEF" bestimmt. Die Mischtemperatur betrug hierbei 260 °C.
Als Ergebnis wurde ein "DEF" ( = "GDM" der Mischung von VESTODUR 3000 mit M2 dividiert durch das "GDM" der Mischung von VESTODUR 3000 mit V4) von 3,5 erhalten.

### Beispiele Nr. 14 - 18

Polyamid-6 (Ultramid, Fa. "BASF") und ABS (Acrylnitril/Butadien/Styrol-Copolymer; "Ronfalin FZ 336", Fa. "DSM") wurden mit verschiedenen Anteilen Verträglichkeitsvermittler M5 aus Beispiel 5 auf einem Ø 35-"Storck" - Einschneckenextruder bei 240 °C compoundiert. Der Anteil der ABS-Komponente wurde in der Versuchsreihe konstant gehalten.

Aus den erhaltenen Compounds wurde zur Charakterisierung der Fließfähigkeit der "Melt Flow Rate" ("MFR") bei 240 °C und einer Auflagemasse von 5 kg bestimmt.

Auf einer "Battenfeld 350-CD" - Schneckenspritzgießmaschine wurden, zwecks Charakterisierung der Kerbschlagzähigkeit ("KSZ") ("Izod", ISO 180 1A) und der Reißdehnung, Prüfkörper der Abmessung 80×10×4 mm bei einer Zylindertemperatur von 245 °C und einer Werkzeugtemperatur von 50 °C hergestellt. Die Zykluszeit betrug 44 s.
Die erhaltenen Ergebnisse sind in der folgenden Tabelle dargestellt.

| Beispiel Nr. | Blendzusammensetzung PA/ABS/M5 | KSZ-lzod 23°C / [kJ/m²] | KSZ-lzod -10°C / [kJ/m²] | Reißdehnung [%] | MFR (240/5) [g/10 min] |
|---|---|---|---|---|---|
| 14 | 60/40/0 | 5.4 | 4.2 | 81 | 21.0 |
| 15 | 58/40/2 | 10.1 | 7.9 | 200 | 22.2 |
| 16 | 55/40/5 | 14.1 | 10.0 | 200 | 15.9 |
| 17 | 50/40/10 | 13.2 | 9.6 | 200 | 15.6 |
| 18 | 45/40/15 | 12.9 | 9.1 | 125 | 12.3 |

Anhand der Ergebnisse von Beispiel 14 - 18 wird deutlich, daß durch die Zugabe von 5 - 10 Gew.-% des Verträglichkeitsvermittlers M5 ein Optimum in den mechanischen Eigenschaften des Compounds erreicht wird.

Besonders bevorzugt ist der Konzentrationsbereich von 5 - 10 Gew.% des Verträglichkeitsvermittlers bei der Grundmischung PA/ABS.

## Patentansprüche

1. Mischung oder Polymerverbund eines Copolymerisats (CP) bestehend aus
70 - 99.9 Gew.-% Methylmethacrylat,
0.1 - 5 Gew.-% Maleinsäureanhydrid **oder einer anderen copolymerisierbaren Säure oder einem copolymerisierbaren Anhydrid** und
0 - 25 Gew.-% weiterer vinylisch copolymerisierbarer Monomere, die mit Ausnahme der Vinylfunktion keine weiteren funktionellen Gruppen aufweisen,
mit einem Polymethacrylat-verträglichen Kunststoff (VK)
und/oder
einem Polymeren (PN), welches wenigstens eine endständige nucleophile Gruppe enthält.

2. Mischung oder Polymerverbund nach Anspruch 1, **dadurch gekennzeichnet, daß** der Polymethacrylat-verträgliche Kunststoff (VK) ein Polymethylmethacrylat (PMMA), ein Acrylnitril/Butadien/Styrol-Copolymerisat (ABS) oder ein Polyvinylidenfluorid (PVDF) ist.

3. Mischung oder Polymerverbund nach Anspruch 1 oder 2, **dadurch gekennzeichnet, daß** das Polymer (PN) ein Polyamid ist.

4. Verfahren zur Herstellung einer Mischung oder eines Polymerverbunds gemäß einem der Ansprüche 1 - 3, **dadurch gekennzeichnet, daß** die Mischungskomponenten zusammen aufgeschmolzen werden oder zunächst die Herstellung eines Preblends des Copolymerisats (CP) mit einer der Komponenten des Polymerblends unter nachfolgender Zugabe der weiteren Komponenten erfolgt.

5. Verwendung eines Copolymerisats (CP) bestehend aus aus
70 - 99.9 Gew.-% Methylmethacrylat,
0.1 - 5 Gew.-% Maleinsäureanhydrid **oder einer anderen copolymerisierbaren Säure oder einem copolymerisierbaren Anhydrid** und
0 - 25 Gew.-% weiterer vinylisch copolymerisierbarer Monomere, die mit Ausnahme der Vinylfunktion keine weiteren funktionellen Gruppen aufweisen,
als Modifizierungsmittel für Polymerblends.

6. Formkörper, hergestellt aus einer Mischung oder einem Polymerverbund nach einem der Ansprüche 1 bis 3.

## Claims

1. Mixture or polymer blend of a copolymer (CP) consisting of
70 - 99.9 wt.% of methyl methacrylate,
0.1 - 5 wt.% of maleic acid anhydride or another copolymerisable acid or a copolymerisable anhydride and
0 - 25 wt.% of other vinylically copolymerisable monomers which have no other functional groups apart from the vinyl function,
with a polymethacrylate-compatible plastic (VK)
and/or
a polymer (PN) which contains at least one terminal nucleophilic group.

2. Mixture or polymer blend according to claim 1, **characterised in that** the polymethacrylate-compatible plastic (VK) is a polymethyl methacrylate (PMMA), an acrylonitrile/butadiene/styrene copolymer (ABS) or a polyvinylidene fluoride (PVDF).

3. Mixture or polymer blend according to claim 1 or 2, **characterised in that** the polymer (PN) is a polyamide.

4. Process for preparing a mixture or a polymer blend according to one of claims 1 to 3, **characterised in that** the components of the mixture are melted together, or a preblend of the copolymer (CP) with one of the components of the polymer blend is prepared first and the other components are added afterwards.

5. Use of a copolymer (CP) consisting of
70 - 99.9 wt.% of methyl methacrylate,
0.1 - 5 wt.% of maleic acid anhydride or another copolymerisable acid or a copolymerisable anhydride and
0 - 25 wt.% of other vinylically copolymerisable monomers which have no other functional groups apart from the vinyl function,
as modifiers for polymer blends.

6. Mouldings produced from a mixture or a polymer blend according to one of claims 1 to 3.

## Revendications

1. Mélange ou composite de polymère d'un copolymère (CP) constitué de 70 - 99,9 % en poids de méthacrylate de méthyle,
- 0,1 - 5 % en poids d'anhydride maléique ou d'un autre acide copolymérisable ou d'un anhydride copolymérisable, et
- 0 - 25 % en poids d'un autre monomère vinylique copolymérisable qui, à l'exception de la fonction vinyle, ne comporte pas d'autres groupes fonctionnels,
avec une matière plastique compatible avec le polyméthacrylate (VK), et/ou
un polymère (PN) qui comporte au moins un groupe nucléophile en bout de chaîne.

2. *Mélange* ou composite de polymère selon la revendication 1,
**caractérisé en ce que**
la matière plastique compatible avec le polyméthacrylate (VK) est un poly(méthacrylate de méthyle) (PMMA), un copolymère acrylonitrile/butadiène/styrène (ABS) ou un poly(fluorure de vinylidène) (PVDF).

3. Mélange ou composite de polymère selon la revendication 1 ou 2,
**caractérisé en ce que**
le polymère (PN) est un polyamide.

4. Procédé pour la préparation d'un mélange ou d'un composite de polymère selon l'une quelconque des revendications 1 à 3,
**caractérisé en ce que**
les composants du mélange sont fondus ensemble ou on effectue d'abord la préparation d'un prémélange du copolymère (CP) avec un des composants du mélange de polymères, avec addition subséquente de l'autre composant.

5. Utilisation d'un copolymère (CP) constitué de
- 70 - 99,9 % en poids de méthacrylate de méthyle,
- 0,1 - 5 % en poids d'anhydride maléique ou d'un autre acide copolymérisable ou d'un anhydride copolymérisable, et
- 0 - 25 % en poids d'un autre monomère vinylique copolymérisable qui, à l'exception de la fonction vinyle, ne comporte pas d'autres groupes fonctionnels,
en tant qu'agent de modification pour mélanges de polymères.

6. Corps moulé, préparé à partir d'un mélange ou d'un composite de polymères selon l'une quelconque des revendications 1 à 3.
